# EUROPEAN PATENT APPLICATION

(11) **EP 4 772 658 A1**
(43) Date of publication of application: **08.07.2026**
(21) Application number: 24859046.5
(22) Date of filing: 09.05.2024
(51) Int. Cl.: C22B 7/00, B01D 11/04, C22B 3/26, C22B 3/32, C22B 23/00, H01M 10/54

(54) **SOLVENT EXTRACTION METHOD FOR SELECTIVELY EXTRACTING COBALT**

(30) Priority: 30.08.2023 JP 2023139430; 29.02.2024 JP 2024029725
(71) Applicant: MEC COMPANY., LTD., Amagasaki-shi, Hyogo 660-0822 (JP)
(72) Inventor: MURAGISHI, Kengo, Amagasaki-shi, Hyogo 660-0822 (JP)
(74) Representative: TBK
(86) International application number: PCT/JP2024/017235
(87) International publication number: WO 2025/046997

(57) **Abstract**

A solvent extraction method for selectively extracting cobalt from a leachate containing at least the cobalt and nickel, the leachate being obtained by subjecting a lithium-ion battery waste to hydrometallurgical processing, the method comprising: a step A of adding a halide salt having an amine chelate skeleton to the leachate; and a step B of selectively extracting the cobalt from the leachate by using neodecanoic acid as an extractant.

## Description

### TECHNICAL FIELD

The present invention relates to a solvent extraction method for finally selectively extracting cobalt from a lithium-ion battery waste.

### BACKGROUND ART

From the viewpoint of SDGs, it has been widely studied to recover and reuse valuable metals such as cobalt and nickel from a lithium-ion battery waste.

When valuable metals such as cobalt and nickel are recovered from the lithium-ion battery waste, processing such as roasting and pulverization is performed on the lithium-ion battery waste, and the obtained lithium-ion battery powder is added to an acidic solution to obtain a leachate in which lithium, copper, cobalt, nickel, iron, aluminum, manganese, and the like are dissolved. Subsequently, solid-liquid separation and solvent extraction are repeatedly performed to obtain a solution in which desired valuable metals such as cobalt and nickel are dissolved. Finally, nickel and cobalt are recovered from each solution by performing electrolysis or the like.

For example, Patent Document 1 below describes a method for separating nickel and cobalt in which magnesium ions are contained in a mineral acid aqueous solution when a phosphonic acid or phosphinic acid containing nickel and cobalt or an ester thereof is back-extracted using the mineral acid aqueous solution.

### PRIOR ART DOCUMENTS

### PATENT DOCUMENTS

Patent Document 1: JP-A-9-209054

### SUMMARY OF THE INVENTION

### PROBLEMS TO BE SOLVED BY THE INVENTION

As a result of intensive studies on the separation method described in Patent Document 1, the present inventors have found that it is difficult to separate cobalt from nickel and copper in particular, and there is room for further improvement in order to selectively separate only cobalt.

In view of the above, an object of the present invention is to provide a solvent extraction method for finally selectively extracting cobalt from a lithium-ion battery waste at a high extraction rate.

### MEANS FOR SOLVING THE PROBLEMS

The above problem can be solved by the following configuration. That is, the present invention relates to a solvent extraction method (1) for selectively extracting cobalt from a leachate containing at least the cobalt and nickel, the leachate being obtained by subjecting a lithium-ion battery waste to hydrometallurgical processing, the method including a step A of adding a halide salt having an amine chelate skeleton to the leachate, and a step B of selectively extracting the cobalt from the leachate by using neodecanoic acid as an extractant.

A solvent extraction method (2) is preferred, in which, in the solvent extraction method (1), the step A is a pre-treatment step of adding the halide salt to the leachate to obtain a pre-treated leachate, the step B is an extraction step of selectively extracting the cobalt from the pre-treated leachate by using the neodecanoic acid as an extractant, and the pre-treatment step is performed before the extraction step.

A solvent extraction method (3) is preferred, in which, in the solvent extraction method (1), the step B is an extraction step of obtaining an extract from the leachate by using the neodecanoic acid as an extractant, the step A is a scrubbing step of adding the halide salt to the extract, and the extraction step is performed before the scrubbing step.

A solvent extraction method (4) is preferred, in which, in any one of the solvent extraction methods (1) to (3), the halide salt is hydrochloride.

A solvent extraction method (5) is preferred, in which, in any one of the solvent extraction methods (1) to (4), the leachate contains copper, and at least a part of the copper is removed in the extraction step.

A solvent extraction method (6) is preferred, in which, in any one of the solvent extraction methods (1) to (5), in the pre-treatment step, the pH of the leachate is adjusted to 7.0 to 9.0.

A solvent extraction method (7) is preferred, in which, in any one of the solvent extraction methods (1) to (6), a concentration of a halide ion derived from the halide salt is 1.5 M or more.

### EFFECT OF THE INVENTION

The present invention relates to a solvent extraction method for finally selectively extracting cobalt from a lithium-ion battery waste, and cobalt can be finally selectively extracted from a leachate containing at least cobalt and nickel at a high extraction rate. Also, in the present invention, even when the leachate further contains copper, cobalt can be selectively extracted at a high extraction rate.

### MODE FOR CARRYING OUT THE INVENTION

The present invention relates to a solvent extraction method for selectively extracting cobalt from a leachate containing at least the cobalt and nickel, the leachate being obtained by subjecting a lithium-ion battery waste to hydrometallurgical processing.

The lithium-ion battery waste is a waste of lithium-ion batteries used in various devices such as electric vehicles, mobile phones, and personal computers. In a lithium-ion battery, a positive electrode having lithium cobaltate or the like as a main active material, a negative electrode having special carbon as a main active material, a separator, and the like are usually laminated or spirally wound in a state of containing an electrolytic solution, and further disposed in an exterior material such as aluminum.

The lithium-ion battery waste is usually subjected to a preprocessing such as roasting or crushing before the hydrometallurgical processing step. In the roasting processing, the lithium-ion battery is heated and held at, for example, 500 to 1000°C for several hours. Heating and holding may be performed in a furnace or in the atmosphere. In the crushing processing, a pulverizer such as a sample mill, a hammer mill, or a hammer crusher is used. In the present invention, preprocessing other than roasting and crushing may be performed before the hydrometallurgical processing step as necessary. For example, a certain amount of lithium may be recovered from the lithium-ion battery powder by subjecting the lithium-ion battery waste to a preprocessing such as roasting and pulverization to form a finely powdered lithium-ion battery powder and then bringing the powder into contact with, for example, ionexchanged water.

The lithium-ion battery waste contains lithium, copper, cobalt, nickel, iron, aluminum, manganese, and the like. The concentration of each metal contained in the lithium-ion battery waste can be measured, for example, by the following method. Specifically, the lithium-ion battery waste is subjected to a preprocessing such as roasting and pulverization to form a finely powdered lithium-ion battery powder, and then the lithium-ion battery powder is added to, for example, aqua regia (hydrochloric acid/nitric acid = 3/1 solution) to obtain a leachate in which lithium, copper, cobalt, nickel, iron, aluminum, manganese, and the like are dissolved. The leachate is preferably one obtained by leaching lithium-ion battery powder with an acidic solution such as aqua regia. The pH of the leachate after addition of aqua regia is preferably, for example, 0.0 to 1.0. As a condition for obtaining the leachate, for example, a condition in which 1.0 to 10.0 g of lithium-ion battery powder is added per 50.0 to 500.0 ml of aqua regia, and the mixture is leached at 25 to 80°C for 1 to 72 hours at a stirring speed of 250 to 1500 rpm can be exemplified. After leaching, solid-liquid separation is performed using a suction filtration machine or the like, and the concentration of each metal in the obtained filtrate is measured. The concentration of each metal in the leachate can be measured with, for example, an ICP optical emission spectrometer (Inductively coupled plasma optical emission spectrometer; ICP-OES).

In the present invention, the conditions for obtaining the leachate are not particularly limited, and the leachate can be obtained, for example, by the following hydrometallurgical processing method.

### (Hydrometallurgical processing method)

The hydrometallurgical processing method may include, for example, the following hydrometallurgical processing step and solid-liquid separation step.

### (Hydrometallurgical processing step)

In the hydrometallurgical processing step, at least one compound (1) selected from the group consisting of ammonia and a salt thereof, and an amine compound and a salt thereof is added to and mixed with the lithium-ion battery waste to obtain a leachate in which at least cobalt and nickel are dissolved.

The compound (1) is at least one compound selected from the group consisting of ammonia and a salt thereof, and an amine compound and a salt thereof. Examples of the salt of ammonia (ammonium salt) include ammonium chloride. Examples of the amine compound include ethylenediamine, tris(2-ethylamino)amine, imidazole, 2-piperazine, triethanolamine, L-lysine, and aminoguanidine. Examples of the salt of the amine compound include ethylenediamine dihydrochloride, 2-piperazine hydrochloride, 2-piperazine hydrochloride monohydrate, cysteamine hydrochloride, triethanolamine hydrochloride, L-lysine hydrochloride, and aminoguanidine hydrochloride. Ammonia and a salt thereof, and an amine compound and a salt thereof may be used alone or in combination. For example, an ammonium salt and ammonia may be combined, or a salt of an amine compound and ammonia may be combined. More specifically, for example, ammonium chloride and ammonia may be combined, 2-piperazine hydrochloride monohydrate and ammonia may be combined, cysteamine hydrochloride and ammonia may be combined, ethylenediamine dihydrochloride and ammonia may be combined, triethanolamine hydrochloride and ammonia may be combined, L-lysine hydrochloride and ammonia may be combined, and aminoguanidine hydrochloride and ammonia may be combined.

Among the compounds (1), at least one compound selected from the group consisting of an amine compound having an amino group and a salt thereof is preferred, and at least one compound selected from the group consisting of a chelating amine compound having two or more amino groups and a salt thereof is further preferred. Specifically, for example, when ethylenediamine, tris(2-ethylamino)amine, 2-piperazine hydrochloride monohydrate, ethylenediamine dihydrochloride, or L-lysine hydrochloride is used, the recovery rates of desired valuable metals such as nickel and cobalt can be further increased, which is preferable.

In order to increase the recovery rates of desired valuable metals such as nickel and cobalt, in the hydrometallurgical processing step, it is preferable to remove at least a part of metals other than cobalt and the nickel by adding an acid to the lithium-ion battery waste in addition to the compound (1) and mixing them, and it is further preferable to remove at least a part of metals other than cobalt and nickel by adding at least one compound (2) selected from the group consisting of a monocarboxylic acid organic acid and an inorganic acid as an acid and mixing them. Examples of the monocarboxylic acid organic acid include formic acid and acetic acid. In addition, examples of the inorganic acid include hydrochloric acid and hydrobromic acid.

When the compound (2) is added in addition to the compound (1) in the hydrometallurgical processing step, the molar ratio of the compound (2): the compound (1) is preferably 1: 1 to 1: 6, more preferably 1: 1 to 1: 2. The recovery rates of desired valuable metals such as nickel and cobalt can be further increased by setting the molar ratio in the above range.

In order to increase the recovery rates of desired valuable metals such as nickel and cobalt, in the hydrometallurgical processing step, the pH of the leachate after adding only the compound (1) or the pH of the leachate after adding the compound (1) and the compound (2) is preferably adjusted to 3.0 to 12.5, and more preferably adjusted to 9.5 to 11.0. In addition, it is preferable to set the temperature of the leachate to 25 to 80°C and stir the leachate at a stirring speed of 500 to 1000 rpm for 8 to 24 hours.

### (Solid-liquid separation step)

Examples of the removal method for removing at least a part of undissolved metals from the leachate obtained in the hydrometallurgical processing step include a method in which a leachate in which at least cobalt and nickel are dissolved and a precipitate of, for example, aluminum or iron to be removed are separated by solid-liquid separation.

In the solvent extraction method according to the present invention, for example, cobalt is selectively extracted from a leachate obtained using the hydrometallurgical processing method or the like. The leachate used in the solvent extraction method according to the present invention may be obtained by performing a treatment method known to those skilled in the art other than the above hydrometallurgical processing method, and may be an acidic aqueous solution, a neutral aqueous solution, and an alkaline solution containing at least cobalt and nickel, and more preferably, an acidic aqueous solution, a neutral aqueous solution, and an alkaline solution containing at least cobalt, nickel, and copper. The solvent extraction method according to the present invention is characterized in that cobalt and nickel can be separated and cobalt can be selectively extracted at a high extraction rate, but it is also possible to separate not only cobalt and nickel but also cobalt and copper and selectively extract cobalt at a high extraction rate. Therefore, in the solvent extraction method according to the present invention, the leachate contains copper, and an excellent effect is also exhibited as a method for removing at least a part of copper in the extraction step.

The solvent extraction method according to the present invention includes a step A of adding a halide salt having at least an amine chelate skeleton to the leachate, and a step B of selectively extracting the cobalt from the leachate by using neodecanoic acid as an extractant. The solvent extraction method according to the present invention may be, for example, a solvent extraction method A in which the step A is a pre-treatment step of adding the halide salt to the leachate to obtain a pre-treated leachate, the step B is an extraction step of selectively extracting the cobalt from the pre-treated leachate by using the neodecanoic acid as an extractant, and the pre-treatment step is performed before the extraction step, or may be a solvent extraction method B in which the step B is an extraction step of obtaining an extract from the leachate by using the neodecanoic acid as an extractant, the step A is a scrubbing step of adding the halide salt to the extract, and the extraction step is performed before the scrubbing step. First, the solvent extraction method A will be described below.

### [Solvent extraction method A]

The solvent extraction method A is a solvent extraction method for selectively extracting cobalt from a leachate containing at least the cobalt and nickel, the leachate being obtained by subjecting a lithium-ion battery waste to hydrometallurgical processing, the method including a pre-treatment step of adding a halide salt having an amine chelate skeleton to the leachate to obtain the pre-treated leachate, and an extraction step of selectively extracting the cobalt from the pre-treated leachate by using neodecanoic acid as an extractant. In the solvent extraction method A, the pre-treatment step is performed before the extraction step. The pre-treatment step and the extraction step in the solvent extraction method A will be described below.

### (Pre-treatment step)

In the pre-treatment step, a halide salt having at least one amino group is added to the leachate to obtain a pre-treated leachate. The halide salt is a compound having at least one amino group, but is more preferably a compound having two or more amino groups and having an amine chelate skeleton. In addition, the halide salt is preferably hydrochloride. Examples of the halide salt that can be used in the present invention include ammonium chloride, piperazine dihydrochloride monohydrate, aminoguanidine hydrochloride, and ethylenediamine dihydrochloride. Among them, ethylenediamine dihydrochloride, which is a compound having an amine chelate skeleton and is hydrochloride, is particularly preferred.

When the leachate is alkaline, it is preferable to adjust the pH of the pre-treated leachate to 7.0 to 9.0 by adding an acid such as hydrochloric acid water. By adjusting to such conditions, cobalt can be finally extracted more selectively and at a higher extraction rate, which is preferable.

In the pre-treatment step, the concentration when the halide salt is added to the leachate is preferably 1.0 to 20.0 mass%, and more preferably 10.0 to 15.0 mass%. By adjusting to such conditions, cobalt can be finally extracted more selectively and at a higher extraction rate, which is preferable.

### (Extraction step)

In the extraction step, cobalt is selectively extracted from the pre-treated leachate by using neodecanoic acid as an extractant. The neodecanoic acid to be used as an extractant is preferably diluted with a diluent such as cyclohexane or benzene. When the neodecanoic acid is diluted, the ratio between the neodecanoic acid and the diluent is preferably 10 to 30 vol% for the neodecanoic acid and 70 to 90 vol% for the diluent.

In the extraction step, the concentration of the halide ion derived from the halide ion salt is preferably set to 1.5 M or more, and preferably set to 1.5 M or more. This setting is preferred because cobalt can be finally extracted more selectively and at a higher extraction rate.

After the extraction step, cobalt moves to the organic phase, and nickel and copper remain in the aqueous phase. By performing a back extraction step as necessary, cobalt moves from the organic phase to the aqueous phase. In the back extraction step, an aqueous sulfuric acid solution can be used as a back extractant. When the aqueous sulfuric acid solution is used as a back extractant, the concentration may be, for example, 5.0 to 20.0 mass%. In the solvent extraction method according to the present invention, cobalt can be selectively separated from cobalt and nickel, and cobalt can also be selectively separated from cobalt, nickel, and copper. Therefore, the present invention is particularly useful as a solvent extraction method in recovering cobalt from a lithium-ion battery waste.

### [Solvent extraction method B]

Next, the solvent extraction method B for selectively extracting cobalt from a leachate containing at least the cobalt and nickel, the leachate being obtained by subjecting a lithium-ion battery waste to hydrometallurgical processing, including a step A of adding a halide salt having an amine chelate skeleton to the leachate, and a step B of selectively extracting the cobalt from the leachate by using neodecanoic acid as an extractant, in which the step B is an extraction step of obtaining an extract from the leachate by using the neodecanoic acid as an extractant, the step A is a scrubbing step of adding the halide salt to the extract, and the extraction step is performed before the scrubbing step will be described below.

### (Extraction step)

In the extraction step, cobalt is selectively extracted from the leachate by using neodecanoic acid as an extractant. The neodecanoic acid to be used as an extractant is preferably diluted with a diluent such as cyclohexane or benzene. When the neodecanoic acid is diluted, the ratio between the neodecanoic acid and the diluent is preferably 10 to 30 vol% for the neodecanoic acid and 70 to 90 vol% for the diluent. When the leachate is alkaline, it is preferable to adjust the pH of the leachate to 7.0 to 9.0 by adding an acid such as hydrochloric acid water. By adjusting to such conditions, cobalt can be finally extracted more selectively and at a higher extraction rate, which is preferable.

### (Scrubbing step)

In the scrubbing step, a halide salt having at least one amino group is added to the extract. The halide salt is a compound having at least one amino group, but is more preferably a compound having two or more amino groups and having an amine chelate skeleton. In addition, the halide salt is preferably hydrochloride. Examples of the halide salt that can be used in the present invention include ammonium chloride, piperazine dihydrochloride monohydrate, aminoguanidine hydrochloride, and ethylenediamine dihydrochloride. Among them, ethylenediamine dihydrochloride, which is a compound having an amine chelate skeleton and is hydrochloride, is particularly preferred.

The pH of the solution used in the scrubbing step is preferably adjusted to 3.5 to 4.0. By adjusting to such conditions, cobalt can be finally extracted more selectively, which is preferable.

In the scrubbing step, the concentration when the halide salt is added to the leachate is preferably 3.0 mass% or more. By adjusting to such conditions, cobalt can be finally extracted more selectively and at a higher extraction rate, which is preferable.

In the scrubbing step, the halide ion concentration derived from the halide ion salt is preferably set to 1.5 M or more. This setting is preferred because cobalt can be finally extracted more selectively and at a higher extraction rate.

After the scrubbing step, cobalt remains in the organic phase and nickel and copper move to the aqueous phase. By performing a back extraction step as necessary, cobalt moves from the organic phase to the aqueous phase. In the back extraction step, an aqueous sulfuric acid solution can be used as a back extractant. When the aqueous sulfuric acid solution is used as a back extractant, the concentration may be, for example, 5.0 to 20.0 mass%. In the solvent extraction method according to the present invention, cobalt can be selectively separated from cobalt and nickel, and cobalt can also be selectively separated from cobalt, nickel, and copper. Therefore, the present invention is particularly useful as a solvent extraction method in recovering cobalt from a lithium-ion battery waste.

### EXAMPLES

Hereinafter, an example of an embodiment according to the present invention will be described, but the present invention is not limited to such description at all.

### (Embodiment 1)

Embodiment 1 was performed based on the solvent extraction method A. That is, the step A was a pre-treatment step of adding a halide salt to a leachate to obtain a pre-treated leachate, the step B was an extraction step of selectively extracting cobalt from the pre-treated leachate by using neodecanoic acid as an extractant, and the pre-treatment step was performed before the extraction step. A specific embodiment is as follows.

### (Production example of leachate)

Lithium-ion battery powder obtained by subjecting a lithium-ion battery waste to roasting and crushing processing was subjected to hydrometallurgical processing to obtain a leachate in which at least cobalt, nickel, and copper were dissolved. Table 1 shows the concentration of metal contained in the leachate.

**[Table 1]**

| pH of leachate | Metal concentration (ppm) contained in leachate | | | | | | |
|---|---|---|---|---|---|---|---|
| | Target metal | | | Non-target metal | | | |
| | Co | Ni | Cu | Fe | Al | Mn | Li |
| 9.66 | 1747 | 3252 | 81 | 0 | 0 | 0 | 180 |

### Example 1

### (Pre-treatment step)

To the leachate obtained above, ammonium chloride as a halide salt was added so as to be 10 mass%, and the pH was adjusted to 7.0 to 9.0 with 35% hydrochloric acid water and the chloride ion concentration was adjusted to 1.5 M or more, thereby obtaining a pre-treated leachate.

### (Extraction step)

50 ml of the pre-treated leachate obtained above (hereinafter, also referred to as "aqueous phase") and 50 ml of neodecanoic acid/cyclohexane = 30/70 (volume ratio) (hereinafter, also referred to as "organic phase") as an extractant were sequentially added to a separatory funnel, and stirred at a volume ratio of 1: 1. After stirring, the aqueous phase was taken out, and the same amount of organic phase was newly added and stirred again. The obtained organic phase was mixed with the initially obtained organic phase to obtain an organic phase with a total volume of 100 ml.

### (Back extraction step)

100 ml of the organic phase obtained above and 100 ml of 6.25% sulfuric acid water (hereinafter, also referred to as "aqueous phase 2") were sequentially added so that the volume ratio was 1: 1, and the mixture was stirred. After stirring, the aqueous phase 2 was taken out, and the metal concentration in the aqueous phase 2 was measured with an ICP optical emission spectrometer (Inductively coupled plasma optical emission spectrometer; ICP-OES).

In the aqueous phase 2, cobalt is selectively extracted, and as the extraction rates of nickel and copper are lower, it means that the cobalt can be selectively extracted at a higher extraction rate. Table 2 shows the results of the extraction rates of cobalt, nickel, and copper. The evaluation criteria of the extraction rate are as follows.

· For Co
   ⊙: Extraction rate of 90% or more
   ○: Extraction rate of 80% to 90%
   △: Extraction rate of 70% to 80%
   x: Extraction rate of 70% or less
For Ni
   ⊙: Extraction rate of 10% or less
   ○: Extraction rate of 10% to 20%
   △: Extraction rate of 20 to 30
   ×: Extraction rate of 30% or more
· For Cu
   ⊙: Extraction rate of 10% or less
   ○: Extraction rate of 10% to 20%
   △: Extraction rate of 20 to 30%
   ×: Extraction rate of 30% or more

### Examples 2 to 4 and Comparative Examples 1 to 2

A solvent extraction method was performed in the same manner as in Example 1 except that the halide salt and the extractant were changed to those shown in Table 2.

**[Table 2]**

| | Halide salt type | Extractant type (extractant/diluent (= 30/70)) | Extraction rate (%) of each metal | | |
|---|---|---|---|---|---|
| | | | Co | Ni | Cu |
| Example 1 | Ammonium chloride | Neodecanoic acid/ cyclohexane | ⊙ | Δ | ⊙ |
| Example 2 | Piperazine dihydrochloride monohydrate | Neodecanoic acid/ cyclohexane | ⊙ | ○ | ⊙ |
| Example 3 | Aminoguanidine hydrochloride | Neodecanoic acid/ cyclohexane | ⊙ | ○ | ⊙ |
| Example 4 | Ethylenediamine dihydrochloride | Neodecanoic acid/ cyclohexane | ⊙ | ⊙ | ⊙ |
| Comparative Example 1 | - | 2-Ethylhexylphosphonic acid-2-ethylhexyl/ cyclohexane | ○ | × | × |
| Comparative Example 2 | - | Neodecanoic acid/ cyclohexane | ⊙ | × | ⊙ |

From the results in Table 2, it is found that cobalt and copper can be extremely efficiently separated in Examples 1 to 4. It is also found that cobalt and nickel can be efficiently separated. In particular, in Examples 2 to 4 using piperazine dihydrochloride monohydrate, aminoguanidine, or ethylenediamine dihydrochloride, which is a compound having an amine chelate skeleton, as the halide salt, cobalt and copper can be particularly efficiently separated.

### (Embodiment 2)

Embodiment 2 was performed based on the solvent extraction method B. That is, the step B was an extraction step of obtaining an extract from a leachate by using neodecanoic acid as an extractant, the step A was a scrubbing step of adding a halide salt to the extract, and the extraction step was performed before the scrubbing step. A specific embodiment is as follows.

### (Production example of leachate)

Lithium-ion battery powder obtained by subjecting a lithium-ion battery waste to roasting and crushing processing was subjected to hydrometallurgical processing to obtain a leachate having a concentration of contained metal described in Table 1.

### Example 5

### (Extraction step)

To the leachate obtained above, 50 ml of a leachate whose pH was adjusted to 7.0 to 9.0 with 35% hydrochloric acid water (hereinafter, also referred to as "aqueous phase") and 50 ml of neodecanoic acid/cyclohexane = 30/70 (volume ratio) (hereinafter, also referred to as "organic phase") as an extractant were sequentially added to a separatory funnel, and stirred at a volume ratio of 1: 1. After stirring, the aqueous phase was taken out, and the same amount of organic phase was newly added and stirred again. The obtained organic phase was mixed with the initially obtained organic phase to obtain an organic phase with a total volume of 100 ml.

### (Scrubbing step)

100 ml of a 3% by mass aqueous solution of piperazine dihydrochloride monohydrate and 100 ml of the organic phase obtained above were sequentially added so that the volume ratio was 1: 1, and the mixture was stirred to recover 100 ml of the organic phase.

### (Back extraction step)

100 ml of the organic phase obtained above and 100 ml of 6.25% sulfuric acid water (hereinafter, also referred to as "aqueous phase 2") were sequentially added so that the volume ratio was 1: 1, and the mixture was stirred. After stirring, the aqueous phase 2 was taken out, and the metal concentration in the aqueous phase 2 was measured with an ICP optical emission spectrometer (Inductively coupled plasma optical emission spectrometer; ICP-OES).

In the aqueous phase 2, cobalt is selectively extracted, and as the extraction rates of nickel and copper are lower, it means that the cobalt can be selectively extracted at a higher extraction rate. Table 3 shows the results of the extraction rates of cobalt, nickel, and copper. The evaluation criteria of the extraction rate are as follows.

For Co
   ⊙: Extraction rate of 90% or more
   ○: Extraction rate of 80% to 90%
   △: Extraction rate of 70% to 80%
   ×: Extraction rate of 70% or less
For Ni
   ⊙: Extraction rate of 10% or less
   ○: Extraction rate of 10% to 20%
   △: Extraction rate of 20 to 30
   ×: Extraction rate of 30% or more
For Cu
   ⊙: Extraction rate of 10% or less
   ○: Extraction rate of 10% to 20%
   △: Extraction rate of 20 to 30%
   ×: Extraction rate of 30% or more

### Examples 6 to 8 and Comparative Examples 3 to 4

A solvent extraction method was performed in the same manner as in Example 5 except that the halide salt was changed to those shown in Table 3.

**[Table 3]**

| | Halide salt type | Extractant type (extractant/diluent (= 30/70)) | Extraction rate (%) of each metal | | |
|---|---|---|---|---|---|
| | | | Co | Ni | Cu |
| Example 5 | Piperazine dihydrochloride monohydrate (3.0 wt%) | Neodecanoic acid/ cyclohexane | ○ | ⊙ | ⊙ |
| Example 6 | Piperazine dihydrochloride monohydrate (5.0 wt%) | Neodecanoic acid/ cyclohexane | × | ○ | ⊙ |
| Example 7 | Ethylenediamine dihydrochloride (3.0 wt%) | Neodecanoic acid/ cyclohexane | ⊙ | ⊙ | ⊙ |
| Example 8 | Ethylenediamine dihydrochloride (5.0 wt%) | Neodecanoic acid/ cyclohexane | ⊙ | ⊙ | ⊙ |
| Comparative Example 3 | 62.5% Sulfuric acid water (3.0 wt%) | Neodecanoic acid/ cyclohexane | × | × | ⊙ |
| Comparative Example 4 | 62.5% Sulfuric acid water (5.0 wt%) | Neodecanoic acid/ cyclohexane | × | × | ⊙ |

From the results in Table 3, it is found that cobalt and copper can be extremely efficiently separated in Examples 5 to 8. In particular, in Examples 5 to 8 using piperazine dihydrochloride monohydrate or ethylenediamine dihydrochloride as the halide salt, it is found that cobalt and nickel can be particularly efficiently separated.

## Claims

1. A solvent extraction method for selectively extracting cobalt from a leachate containing at least the cobalt and nickel, the leachate being obtained by subjecting a lithium-ion battery waste to hydrometallurgical processing, the method comprising:
a step A of adding a halide salt having an amine chelate skeleton to the leachate; and
a step B of selectively extracting the cobalt from the leachate by using neodecanoic acid as an extractant.

2. The solvent extraction method according to claim 1, wherein the step A is a pre-treatment step of adding the halide salt to the leachate to obtain a pre-treated leachate, the step B is an extraction step of selectively extracting the cobalt from the pre-treated leachate by using the neodecanoic acid as an extractant, and the pre-treatment step is performed before the extraction step.

3. The solvent extraction method according to claim 1, wherein the step B is an extraction step of obtaining an extract from the leachate by using the neodecanoic acid as an extractant, the step A is a scrubbing step of adding the halide salt to the extract, and the extraction step is performed before the scrubbing step.

4. The solvent extraction method according to claim 1, wherein the halide salt is hydrochloride.

5. The solvent extraction method according to claim 1, wherein the leachate contains copper, and at least a part of the copper is removed in the extraction step.

6. The solvent extraction method according to claim 1, wherein in the pre-treatment step, a pH of the leachate is adjusted to 7.0 to 9.0.

7. The solvent extraction method according to claim 1, wherein a concentration of a halide ion derived from the halide salt is 1.5 M or more.
